# EUROPEAN PATENT APPLICATION

(11) **EP 4 811 757 A1**
(43) Date of publication of application: **23.09.2026**
(21) Application number: 25164439.9
(22) Date of filing: 18.03.2025
(51) Int. Cl.: H04M 1/724, H04M 1/72409, H04M 1/7243, B60W 50/00, G06F 40/30, G06V 20/59, H04L 51/063, H04W 12/02, H04W 12/60

(54) **METHOD FOR OUTPUTTING INFORMATION IN A VEHICLE, COMPUTER PROGRAM AND/OR COMPUTER-READABLE STORAGE MEDIUM, DATA PROCESSING DEVICE AND VEHICLE**

(71) Applicant: Bayerische Motoren Werke Aktiengesellschaft, 80809 München (DE)
(72) Inventor: Zaki, Tarek, 80805 München (DE)

(57) **Abstract**

Method for outputting information in a vehicle; wherein the method comprises: obtaining an incoming information with a semantic content; determining, based on the semantic content, a privacy information; determining, based on the semantic content and on the privacy information, a summary of the information; and outputting a control signal to user-perceivably output the summary in the vehicle.

## Description

The present disclosure relates to a method for outputting information in a vehicle. The disclosure further relates to a computer program and/or a computer-readable storage medium, to a data processing device and to a vehicle.

Serving passengers with convenient and/or entertaining digital features may be considered an important aspect for modern vehicles. Methods for summarizing information in a vehicle are known in the prior art. It is furthermore known that voice messages of a passenger vehicle may be obtained and summarized.

Messages may distract an occupant of the vehicle, in particular the driver of the vehicle. The occupant may not have the time, the capability and/or the opportunity to read and/or listen to incoming text messages, voicemails, emails, etc. The driver may not even be allowed to read a long text, for example with a plurality of lines, to be not distracted from the driving task. It is known to display notifications instead of an entire message, wherein the notification indicates the incoming of the message and may consist of the first line of the entire message. However, such a notification may be irrelevant due to the potentially generic information in the beginning of the message.

US 2021/150141 A1 discloses a vehicle terminal system for processing a message includes: a portable device for receiving the message; and a vehicle terminal for analyzing a text of the message received from the portable device to yield an analysis result, and for determining a recommended operation corresponding to the analysis result. Thus, the vehicle terminal does not output pop-up images for all messages received from the portable device and recommends a message suitable for the user. In one embodiment, the controller may determine a message summarization scheme corresponding to the driver's state.

It is known that passengers do not always wish to connect their messages and social media applications to the vehicle because of privacy. E.g., a user may wish that an incoming message and/or a summary thereof is not output to be perceived by passengers of the vehicle other than the user. For example, the user may not want his and/or her private messages to be visible to other passengers via, for example, a pop-up notification.

In the light of the prior art, the object of the present disclosure is to provide a contribution to the prior art, and to provide a method being suitable for improving at least one of the above-mentioned aspects of the prior art, respectively. In particular, it is an object of the disclosure to improve outputting of information in the vehicle by respecting privacy.

The object is solved by the features of the independent claim. The dependent claims have further embodiments of the disclosure as their subject matter.

According to an aspect of the present disclosure a method for outputting information in a vehicle is provided; wherein the method comprises: obtaining an incoming information with a semantic content; determining, based on the semantic content, a privacy information; generating, based on the semantic content and on the privacy information, a summary of the information; and outputting a control signal to user-perceivably output the summary in the vehicle.

The method involves obtaining the incoming information with an identifiable meaning as the semantic content. The semantic content may be analyzed to determine the privacy information. The privacy information may indicate any information in relation to personal data, e.g., the privacy information may comprise names, nicknames and/or other information related to a person, etc. The summary may then be generated under consideration of the privacy information. In other words, the method comprises: receiving incoming information with semantic content; determining privacy information based on the semantic content; and generating a summary of the information based on both the semantic content and the privacy information. Therein, the summary may be generated so that personal information may be made unrecognizable and/or anonymized, i.e., the privacy information may be omitted and/or modified. Finally, a control signal is transmitted to present this summary to the user in the vehicle. The summary may be comprised by a notification, wherein the notification may indicate an incoming of the incoming information.

The core idea is to create an optionally concise summary of the most essential and critical information of the incoming information, wherein privacy concerns may be considered by determining the privacy information based on the semantic content. For example, personal information may be omitted when the summary is generated. By doing so, distractions of the driver may be reduced and/or eliminated, valuable time for the passengers may be saved, and, due to resolved privacy concerns, an incentive for the passengers to link their user equipment and/or to utilize in-car apps more may be given.

Optionally, the method further comprises: determining an identification information of one or more passengers of the vehicle; and determining the privacy information, generating the summary and/or outputting the control signal is performed depending on the identification information. Therein, the method may be specifically adapted to consider the presence and/or identity of passengers within the vehicle when the summary is generated under consideration of the privacy information. By the identity information, it is possible that personal contexts are detected and considered appropriately. For example, if the vehicle comprises front and rear seat passengers, a co-driver entertainment (CDE) device may not display private information in the notifications to avoid that this content will be visible to the rear seat passengers.

Optionally, the control signal is adapted to output the summary within the vehicle locally differentiated, based on the identification information. This achieves that the summary may be output in a smart way, optionally in response to the identity of the passengers within the vehicle and/or in response to respective gazing directions of the passengers. For example, if there are two rear-seat passengers, then a theatre screen may not show private summaries because the rear-seat passenger may be able and not be intended to read it.

Optionally, the method further comprises: determining a gaze information relating to a potential and/or factual gaze of one or more passengers of the vehicle; and determining the privacy information, generating the summary and/or outputting the control signal is performed depending on the gaze information. The gaze information characterizes the gaze of passengers within the vehicle, i.e., in a cabin of the vehicle. Therein, it is realized that the gaze of passengers within the vehicle may influence a capability of the passengers to perceive information. E.g., a passenger on a front seat may not be able to visually perceive information that may be displayed on a rear display; and/or a passenger on a rear seat may be able, depending on its gaze, to visually perceive information that may be displayed on a front display, e.g., on a central display. Thus, the presentation of the summary may be generated under consideration of the gaze of the passengers and of the privacy information. The potential gaze may be determined by an arrangement of one or more passengers within the vehicle, i.e., an occupancy of seats by the one or more passengers. The factual gaze of the passengers, i.e., a direction and/or duration of a gaze, may be effectively monitored and/or evaluated on the basis of image data of a cabin camera of the vehicle.

Optionally, the control signal is adapted to output the summary within the vehicle locally differentiated, based on the gaze information. This achieves that the summary may be output in a smart way, optionally in response to the gaze of the passengers within the vehicle and/or in response to respective gazing directions of the passengers. For example, if there are two rear-seat passengers, then a theatre screen may not show private summaries because the rear-seat passenger may be able to read it. Optionally, it is possible that the CDE may display the summary only if the relevant passenger may look at the CDE. If another passenger may look at the CDE and/or if his/her gaze is directed towards the summary, then the summary may be obscured. For example, the CDE would extend the privacy feature to lock the display if rear-seat passengers look at the CDE display.

Optionally, the summary comprises a content section relating to the semantic content, an emotional section relating to an emotion that characterizes the incoming information and/or an implication section relating to an implication based on the incoming information. The summary may be sectioned as: information, emotion, and implication, also called "call to action". The summary may comprise the key information of the semantic content of the incoming information, a concise description and/or illustration of a sender's emotion (e.g. happy, angry, nervous, etc.) and/or it may comprise a precise description to the recipient of what is the "call to action" (e.g. be home today latest at 10:00PM). If the implication section comprises a location, e.g., as an explicit address and/or a name of the location, it is possible to transmit the location to a navigation system and to add it to the route and/or define a corresponding destination.

Optionally, the incoming information is obtained via a communication module of the vehicle and/or via a user equipment that is communicatively coupled to the vehicle. Therein, the incoming message may be received via the communication module of the vehicle and may relate to an in-car application, e.g., an in-car messenger may receive the incoming information directly. Alternatively or additionally, a passenger may couple its user equipment to the vehicle and the incoming message is originally sent to the user equipment and the summary is, due to coupling, to be output via the vehicle.

Optionally, generating the summary is performed by a generative machine learning model. Such a generative machine learning model may also be called a generative artificial intelligence (Gen-Al). Such a model may have the capability to read, comprehend and summarize the content of text, voice as well as visual messages and/or a combination thereof, e.g., a video and/or an animation. Thus, it is realized that it is possible to deploy such a generative machine learning model that processes the incoming information and/or reads incoming messages and accordingly create the summary, e.g., a 1-line summary notification, of the most essential content of the incoming information. And depending on the context, any or specific private information may be excluded. To ensure data privacy, it may be ensured that the generative machine learning model may not get trained on data of the passengers and that the data may not be used for any other purpose beside privately summarizing the incoming information.

Optionally, the incoming information comprises a text message, a graphic, a voice message and/or a video message and/or the summary is determined to be output on a user interface of the vehicle as a condensed text, a graphical representation, as a video and/or acoustically. A possibility is to summarize a longer text message and/or email to a one-line summary. It is further possible to illustrate the summary and/or an emotion that relates to the incoming message, e.g., via an image, optionally in conjunction with a word and/or by creating and/or choosing an emoji, for example to show an image that is worth "1000 words". Optionally, if a sender's picture is available, it is possible to adapt the picture, e.g., a face of the sender, with a fitting emotion to the incoming information. Furthermore, illustrating an emotion can comprise changing a color of a background of the summary, e.g., red for "danger", green for "okay". For voice messages, it is possible to create the summary mimicking the sender's voice itself, optionally while disclosing to the passenger that this is a summary of the incoming information. It is possible to summarize any of text message, voice message and/or video message by any of text, graphical representation, as a video and/or acoustically.

According to an aspect of the disclosure, a computer program and/or computer-readable storage medium is provided, comprising instructions which, when being executed by a data processing device, causes the data processing device to carry out the method according to the disclosure. Optionally, the computer program and/or computer-readable storage medium comprises an instruction which, when being executed by a data processing device, causes the data processing device to realize one or more optional and/or preferred technical features of the method according to the disclosure to achieve a technical effect relating thereto.

According to an aspect of the disclosure, a data processing device for a vehicle is provided, wherein the data processing device is adapted to perform the method according to the disclosure. Optionally, the data processing device is adapted to realize one or more optional and/or preferred technical features of the method according to the disclosure to achieve a technical effect relating thereto.

According to an aspect of the disclosure, a vehicle is provided, comprising the data processing device according to the disclosure. Optionally, the data processing device and/or the vehicle is adapted to realize one or more optional and/or preferred technical features of the method according to the disclosure to achieve a technical effect relating thereto.

In an alternative embodiment, the data processing device may be used in a vehicle external server, i.e., a backend, and may be communicatively coupled to the vehicle so that more complex applications may be used to generate the summary. In contrast, simple models and/or numerically effective models may be deployed in the vehicle to generate the summary.

An embodiment according to an aspect of the present disclosure is described with reference to the Figures below.
Fig. 1 shows schematically a vehicle according to an embodiment of the disclosure;
Fig. 2 shows a schematic chart of a method according to an embodiment of the disclosure; and
Fig. 3 shows a schematic of a computer-readable storage medium according to an embodiment of the disclosure.

In the following embodiments are described with reference to the Figures, wherein the same reference signs are used for the same objects throughout the description of the Figures and wherein the embodiment is just one specific example for implementing the disclosure and does not limit the scope of the disclosure as defined by the claims.

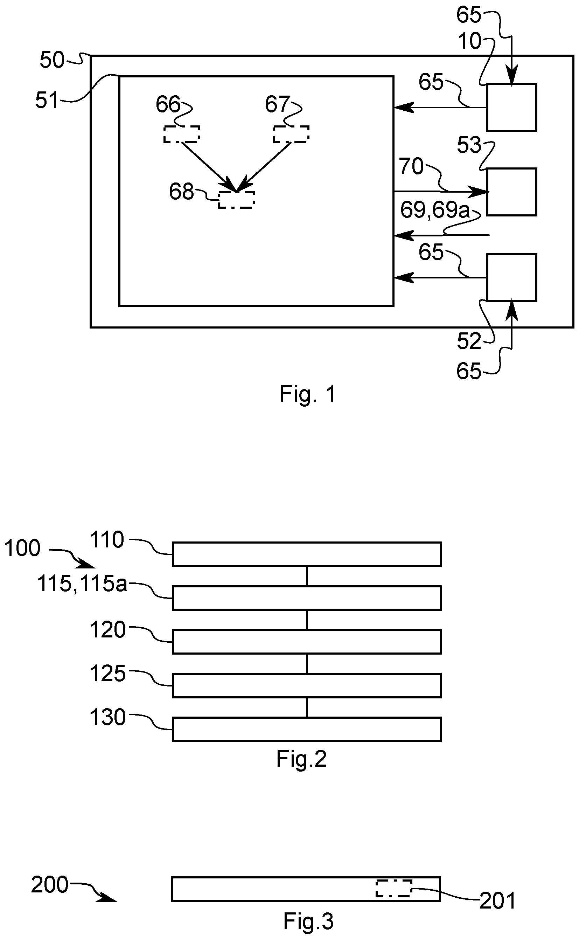

Figure 1 shows schematically a vehicle 50 according to an embodiment of the disclosure. The vehicle 50 is a passenger vehicle. The vehicle 50 is a land vehicle. In addition to the vehicle 50, Figure 1 illustrates a user equipment 10. The user equipment 10 according to the disclosure is a device or apparatus, such as a mobile phone, tablet, wearable device, or other computing device, that is capable of communicating with a cellular network. The user equipment 10 typically includes hardware components and software applications that enable it to perform various functions such as voice calling, data transmission, and internet access.

The vehicle 50 comprises a data processing device 51, a communication module 52 and a user interface 53. The vehicle 50 may further comprise (not shown) camera system to monitor an interior of the vehicle 50 and/or passengers within the vehicle 50. The vehicle 50 may further comprise a plurality of seats, wherein each of the seat is adapted that one of the passengers may be arranged on the seat. The camera system may monitor the passengers on the different seats.

The data processing device 51 and/or the vehicle 50 is adapted to perform the method 100 as described with reference to Figure 2. Therein, the data processing device 51 is communicatively coupled to the communication module 52, the user interface 53 and the user equipment 10.

The communication module 52 is adapted to receive information via a wireless communication channel, for example via a wireless local area network and/or a cellular network. The data processing device 51 and the communication module 52 are communicatively interconnected so that information that is received via the communication module 52 may be transmitted and/or related to the data processing device.

The user interface 53 is adapted to output information that is perceivable by the passenger of the vehicle 50. Therein, the user interface 53 is adapted to output information in a visually and/or acoustically perceivable manner. For example, user interface 53 comprises displays to display visually perceivable information, for example text, images and/or videos. And the user interface 53 comprises for example speakers to present acoustically perceivable information, for example sound and/or voice. The user interface 53 is adapted to output information locally within the vehicle e.g. to present information to one or more of the passengers of the vehicle. The user interface 53 and the data processing device 51 are communicatively interconnected so that the data processing device 51 may control the information that is to be output by the user interface 53.

The data processing device 51 is adapted to obtain an incoming information 65 with a semantic content 66. The semantic content 66 is the meaningful information contained within the incoming information 65 as a dataset and/or document in the form of linguistic, logical and/or ontological elements. The semantic information 66 may pertain the interpretation and understanding of the content of the incoming information 65 beyond its mere syntactical representation. The incoming information 65 comprises a text message, a graphic, a voice message and/or a video message. Any of the text message, the graphic, the voice message and/or the video message comprises semantic content 66.

The incoming information 65 is obtained via a communication module 52 of the vehicle 50 and/or via a user equipment 10 that is communicatively coupled to the vehicle 50. I.e., the incoming information 65 may be directly received by the communication module 52 and transmitted to the data processing device 51. Alternatively or additionally, the incoming information 65 may be received by the user equipment 10 and transmitted to the data processing device 51. Alternatively or additionally, the incoming message 65 may comprise a discussion that happened over a phone call in the vehicle and/or between passengers.

The data processing device 51 is adapted to determine an identification information 69 of one or more passengers of the vehicle 50. The identification information 69 may for example be obtained by image processing of images of the camera device, e.g., a cabin camera, and/or by any other means that may identify one or more of the passengers. The identification information 69 may comprise an information in relation to an identity and/or an arrangement of one or more of the passengers of the vehicle 50.

The data processing device 51 is adapted to determine a gaze information 69a relating to a potential and/or factual gaze of one or more passengers of the vehicle 50. The gaze information 69 ma for example be obtained by seat occupancy sensor information and/or by image processing of images of the camera device, e.g., a cabin camera, and/or by any other means that may enable determining a gaze of one or more of the passengers. The gaze information 69a may comprise an occupancy of seats and/or an information in relation to a gaze, i.e., a look, in particular a trajectory, a direction and/or a duration thereof, of one or more of the passengers of the vehicle 50.

The data processing device 51 is adapted to determine, based on the semantic content 66, a privacy information 67. The privacy information 67 may characterize whether the semantic content 66 relates to the person and/or to any personal data. The privacy information 67 may be determined by processing the semantic content 66, e.g., by the identification of names.

The data processing device 51 is adapted to generate, based on the semantic content 66 and on the privacy information 67, a summary 68 of the information 65. The summary 68 of the information 65 represents the core information of the semantic content 66 with consideration of the privacy information 67. For example, the summary 68 may reflect the semantic content 66 but with anonymized personal information as privacy information. The data processing device 51 is adapted to deploy a machine learning model to generate the summary 68.

The data processing device 51 is adapted to generate the summary 68 so that the summary 68 comprises a content section relating to the semantic content 66, an emotional section relating to an emotion that characterizes the incoming information 65 and/or an implication section relating to an implication based on the incoming information 65. In other words, the summary 68 may be sectioned into different aspects, wherein the content section reflects the semantic content 66, the emotional section reflects an emotion that may be intended by the incoming information 65 and the implication section reflects an implication that may be intended and/or required by the incoming information.

The data processing device 51 is adapted to determine the summary so that the summary 68 is determined to be output on a user interface 53 of the vehicle 50 as a condensed text, a graphical representation, as a video and/or acoustically. The data processing device 51 is adapted to output a control signal 70 to user-perceivably output the summary 68 in the vehicle 50. The control signal 70 is output to the user interface 53 to cause outputting the summary 68 so that at least one of the passengers may perceive the summary 68. Therein, the control signal 70 may be adapted to output the summary 68 within the vehicle 50 locally differentiated, based on the identification information 69 and/or on the gaze information 69a. The data processing device 51 is adapted to determine the privacy information 67, generate the summary 68 and/or output the control signal 70 depending on the identification information 69 and/or on the gaze information 69a.

Figure 2 shows a schematic chart of a method 100 according to an embodiment of the disclosure. The method 100 of Figure 2 is a method 100 for outputting information in a vehicle 50. Such a vehicle 50 is described with reference to Figure 1. Figure 2 is described under reference to figure 1.

The method 100 of Figure 2 comprises: obtaining 110 an incoming information 65 with a semantic content 66. The incoming information 65 comprises a text message, a graphic, a voice message and/or a video message. The incoming information 65 is obtained via a communication module 52 of the vehicle 50 and/or via a user equipment 10 that is communicatively coupled to the vehicle 50.

The method 100 comprises: determining 115 an identification information 69 of one or more passengers of the vehicle 50.

The method 100 comprises: determining 115a a gaze information 69a relating to a potential and/or factual gaze of one or more passengers of the vehicle 50.

The method 100 comprises: determining 120, based on the semantic content 66, a privacy information 67.

The method 100 comprises: generating 125, based on the semantic content 66 and on the privacy information 67, a summary 68 of the incoming information 65.

Generating 125 the summary 68 is performed by a machine learning model.

The summary 68 comprises a content section relating to the semantic content 66, an emotional section relating to an emotion that characterizes the incoming information 65 and/or an implication section relating to an implication based on the incoming information 65.

The summary 68 is determined to be output on a user interface 53 of the vehicle 50 as a condensed text, a graphical representation, as a video and/or acoustically.

The method 100 comprises: outputting 130 a control signal 70 to user-perceivably output the summary 68 in the vehicle 50.

The control signal 70 is adapted to output the summary 68 within the vehicle 50 locally differentiated, based on the identification information 69.

The control signal 70 is adapted to output the summary 68 within the vehicle 50 locally differentiated, based on the gaze information 69a.

Determining 120 the privacy information 67, generating 125 the summary 68 and/or outputting 130 the control signal 70 is performed depending on the identification information 69.

Determining 120 the privacy information 67, generating 125 the summary 68 and/or outputting 130 the control signal 70 is performed depending on the gaze information 69a.

Figure 3 shows a schematic of a computer-readable storage medium 200 according to an embodiment of the disclosure. The computer-readable storage medium 200 comprises instructions 201 which, when being executed by a data processing device 51, causes the data processing device 51 to carry out the method 100 as described with reference to Figure 2.

The instructions 201 may be provided as a program code in any code and/or in any language, in particular as a program code that is suitable for vehicle control. The computer-readable medium 200 may be and/or comprise any digital data storage device, such as a USB flash drive, hard drive, CD-ROM, SD card and/or SSD card. The computer program does not necessarily have to be stored on such a computer-readable storage medium, but can also be accessed and/or provided via the internet or otherwise.

### List of reference signs (part of the description)

- 10: user equipment

- 50: vehicle
- 51: data processing device
- 52: communication module
- 53: user interface

- 65: incoming information
- 66: semantic content
- 67: privacy information
- 68: summary
- 69: identification information
- 69a: gaze information
- 70: control signal

- 100: method
- 110: obtaining
- 115: determining an identification information
- 115a: determining a gaze information
- 120: determining a privacy information
- 125: generating
- 130: outputting

- 200: computer program and/or computer-readable storage medium
- 201: instruction

## Claims

1. Method (100) for outputting information in a vehicle (50); wherein the method (100) comprises:
- obtaining (110) an incoming information (65) with a semantic content (66);
- determining (120), based on the semantic content (66), a privacy information (67);
- generating (125), based on the semantic content (66) and on the privacy information (67), a summary (68) of the information (65); and
- outputting (130) a control signal (70) to user-perceivably output the summary (68) in the vehicle (50).

2. Method (100) as claimed in claim 1, wherein the method (100) further comprises:
- determining (115) an identification information (69) relating to an identity of one or more passengers of the vehicle (50); and
- determining (120) the privacy information (67), generating (125) the summary (68) and/or outputting (130) the control signal (70) is performed depending on the identification information (69).

3. Method (100) as claimed in claim 2, wherein
- the control signal (70) is adapted to output the summary (68) within the vehicle (50) locally differentiated, based on the identification information (69).

4. Method (100) as claimed in any one of the preceding claims, wherein the method (100) further comprises:
- determining (115a) a gaze information (69a) relating to a potential and/or factual gaze of one or more passengers of the vehicle (50); and
- determining (120) the privacy information (67), generating (125) the summary (68) and/or outputting (130) the control signal (70) is performed depending on the gaze information (69a).

5. Method (100) as claimed in claim 4, wherein
- the control signal (70) is adapted to output the summary (68) within the vehicle (50) locally differentiated, based on the gaze information (69a).

6. Method (100) as claimed in any one of the preceding claims, wherein
- the incoming information (65) is obtained via a communication module (52) of the vehicle (50) and/or via a user equipment (10) that is communicatively coupled to the vehicle (50).

7. Method (100) as claimed in any one of the preceding claims, wherein
- generating (125) the summary (68) is performed by a generative machine learning model.

8. Computer program and/or computer-readable storage medium (200), comprising instructions which, when being executed by a data processing device (51), causes the data processing device (51) to carry out the method (100) as claimed in any one of the preceding claims.

9. Data processing device (51) for a vehicle (50), wherein the data processing device (51) is adapted to perform the method as claimed in any one of claims 1 to 7.

10. Vehicle (50), comprising the data processing device (51) as claimed in claim 9.
